**Europäisches Patentamt**

**European Patent Office**

**Office européen des brevets**

(19)

(11) Veröffentlichungsnummer: **0 097 963**
**B1**

(12) # EUROPÄISCHE PATENTSCHRIFT

(45) Veröffentlichungstag der Patentschrift:
17.09.86

(21) Anmeldenummer: 83106318.5

(22) Anmeldetag: 29.06.83

(51) Int. Cl.⁴: **F 16 H 1/48**

(54) **Planetengetriebe, insbesondere für Schienenfahrzeuge.**

(30) Priorität: 30.06.82 DE 3224341

(43) Veröffentlichungstag der Anmeldung:
11.01.84 Patentblatt 84/2

(45) Bekanntmachung des Hinweises auf die Patenterteilung:
17.09.86 Patentblatt 86/38

(84) Benannte Vertragsstaaten:
AT BE CH DE FR GB IT LI NL SE

(56) Entgegenhaltungen:
AT - B - 264 943
AT - B - 265 793
CH - A - 543 689
DE - A - 2 208 036
DE - B - 1 191 648
GB - A - 1 222 729
US - A - 3 244 020
US - A - 3 289 488
US - A - 3 375 735

(73) Patentinhaber: **Thyssen Industrie AG, Am Thyssenhaus 1, D-4300 Essen 1 (DE)**

(72) Erfinder: **Korn, Gerhard, Marienburger Weg 15a, D-4330 Mülheim (DE)**

(74) Vertreter: **Jung, Hermann L., Dipl.-Chem., Postfach 1728 Augusta-Allee 10, D-6380 Bad Homburg v.d.H. (DE)**

## Beschreibung

Die Erfindung bezieht sich generell auf ein von einem inneren Zentralrad angetriebenes Planetengetriebe, insbesondere in Laufrädern von Schienenfahrzeugen, dessen Planetenträger den Abtrieb bildet und dessen Planetenräder unter Lastausgleich mit dem äusseren feststehenden Zentralrad kämmen, und zwar derart, dass die Planetenräder und das äussere Zentralrad in ihrer gemeinsamen Ebene radial und relativ zueinander bewegbar sind.

Für die erfolgreiche Anwendung von Planetengetrieben ist ein guter Zahndruckausgleich unter den Planetenrädern von grosser Bedeutung. Dieser wird üblicherweise durch die radial freibewegliche Anordnung der Planetenräder und/oder eines der Zentralräder bewirkt. Die freie Beweglichkeit dieser Räder bringt aber nicht bei allen Planetengetrieben Vorteile. Sie ist bei schnellaufenden Getrieben insofern nicht sehr wirksam, als die Räder infolge der ansteigenden Massenkräfte leicht zu Schwingungen kommen, so dass der Zahndruckausgleich beeinträchtigt wird. Auch treten dabei unliebsame Geräusche auf.

Aber auch bei langsamer laufenden Getrieben können Schwierigkeiten entstehen, wenn ohne Last angefahren wird oder eine Momentumkehr stattfindet, wie z.B. bei intermittierend oder reversierend arbeitenden Maschinen oder Fahrzeugen der Fall ist. Während bei durchlaufenden Maschinen die radial beweglichen Räder beim Anfahren sofort in eine günstige Betriebslage gelangen, wo sie verbleiben, sinken die Planetenräder bei intermittierendem oder reversierendem Betrieb bei jedem Stillstand oder im Leerlauf in die Verzahnung des äusseren Zentralrades ab bzw. setzt sich das äussere Zentralrad auf die Verzahnung der Planetenräder, wodurch es zu einer Zahnanlage an der Vorwärts- und Rückwärtsflanke kommt, was zu polternden Geräuschen führt.

Der Erfindung liegt die Aufgabe zugrunde, ein Planetengetriebe, das eingangs im allgemeinen umrissen wurde, so auszubilden, dass die vorerwähnten Nachteile bei intermittierendem oder reversierendem Betrieb in einfacher Weise vermieden werden.

Bei der Lösung dieser Aufgabe geht zunächst die Erfindung im Oberbegriff des Anspruchs 1 von einem Planetengetriebe, insbesondere in Laufrädern von Schienenfahrzeugen, aus, dessen inneres Zentralrad angetrieben ist, dessen Planetenträger mit dem Laufrad umläuft und dessen mit dem äusseren feststehenden Zentralrad kämmende Planetenräder in ihrer Ebene zum Zwecke des Lastausgleiches beweglich angeordnet sind. Ein derartiges Getriebe ist bereits durch die DE-B 1 030 195 bekannt. Dort sind die Planetenräder an schwenkbaren Laschen befestigt, die tangential zum Laufkreis liegen und mit ihren Enden an dem Planetenträger angelenkt sind, so dass im Endeffekt jedes der Planetenräder für sich radial beweglich gelagert ist.

Die diesbezügliche Lösung der Aufgabe besteht darin, dass rotationssymmetrisch um die Getriebemitte herum gleichstarke und mit ihren radialen Wirkungslinien sich in einem gemeinsamen Punkt schneidende Druckfedern vorgesehen sind, die sich auf einem zentralen Teil des Laufrades abstützen und den Planetenträger zentrieren, der Planetenträger mit den Achsen der Planetenräder starr, jedoch mit der Nabe des Laufrades über eine Zahnkupplung radial bewegbar verbunden ist und wahlweise zu der über ihren Träger vorgenommenen Beweglichkeit der Planetenräder auch das äussere Zentralrad radial beweglich ist.

Während die vorstehenden Massnahmen auf ein Getriebe mit in ihrer Ebene beweglich angeordneten Planetenrädern abgestellt sind, kann die Aufgabe der Erfindung auch an einem Getriebe verwirklicht werden, bei dem das äussere Zentralrad – anstatt des Planetenträgers – radial beweglich ist.

Diesbezüglich bezieht sich die Erfindung – entsprechend dem Oberbegriff des Anspruchs 2 – auf ein von einem inneren Zentralrad angetriebenes Planetengetriebe, insbesondere in Laufrädern von Schienenfahrzeugen, dessen Planetenträger mit den Achsen der Planetenräder starr vereint ist und den Abtrieb bildet, wobei um die Getriebemitte herum rotationssymmetrische, gleichstarke, mit ihren radialen Wirkungslinien sich in einem gemeinsamen Punkt schneidende und zentrierende Federn das äussere Zentralrad mit einem das Reaktionsmoment desselben aufnehmenden flanschartigen und ortsfesten Teil radial bewegbar verbinden.

Ein derartiges Getriebe ist wiederum bereits durch die DE-B 1 191 648 bekannt. Dort sind im äusseren Zentralrad sowie in einer dieses Rad axial umgreifenden Auskragung eines flanschartigen, feststehenden Teiles deckungsgleich gegenüberliegende Hohlräume vorgesehen, die zur Aufnahme von parallel zu der Achse des Planetengetriebes angeordneten Hülsenfedern dienen, welche ihrerseits das äussere Zentralrad auch radial elastisch abstützen.

In Kenntnis dieser Konstruktion ist nun die Lösung gemäss der Erfindung darin zu sehen, dass zwischen dem äusseren Zentralrad und dem flanschartigen Teil eine Zahnkupplung angeordnet ist, als Federn sich auf dem flanschartigen Teil abstützende Druckfedern dienen und wahlweise zu der durch die Druckfedern vorgenommenen Beweglichkeit des äusseren Zentralrades auch der Planetenträger radial beweglich ist.

Durch die Druckfedern werden die beweglich angeordneten Teile mit einer solchen Kraft angehoben und in der zentrischen Lage gehalten, dass dadurch die beim Anfahren infolge der Zahnkräfte eintretende Verschiebung derselben im Sinne eines Lastausgleiches unter den Planetenrädern nicht behindert wird. Das bedeutet, dass die Abstützung nach den vorstehenden Merkmalen ein vollständiges Absinken der Planetenräder in die Verzahnung des inneren Zentralrades oder ein Aufsitzen des äusseren Zentralrades verhindert, so dass es nicht zu einer sogenannten Beidflankenanlage und den damit verbundenen Poltergeräuschen kommt. Andererseits wird dadurch, dass eine ausreichende Beweglichkeit des Planetenträgers oder des äusseren Zentralrades bestehen bleibt, der selbsttätige Belastungsausgleich unter den Planetenrädern nicht behindert. Die Anwendung gerade von Druckfedern ist zur Abstützung besonders günstig im Hinblick auf die bei Fahrzeugen stossartig auftretenden Schwingungen und Vertikalstössen.

Zweckmässig übt jede der Druckfedern im eingebauten Zustand eine Kraft aus, die dem Gewicht des durch sie zentrierten Teiles entspricht. Die Gesamtwirkung derartiger Druckfedern sind ausgewogen, so dass die betroffenen Teile, der Planetenträger oder das äussere Zentralrad, weder zu steif noch zu weich zentriert sind.

Um zu erreichen, dass das äussere Zentralrad mit einfachen Mitteln festgehalten wird, ist ihm ein feststehender Halteflansch zugeordnet, der mit einer Hohlachse die Nabe des Laufrades durchsetzt. Die Hohlachse kann dann ausserhalb der sich drehenden Radnabe an feststehenden Teilen des Laufgestells befestigt werden.

Eine bevorzugte Weiterbildung der Erfindung besteht darin, dass die Druckfedern sich auf je einem in den Planetenträger zwischen den Planetenrädern einragenden Vorsprung der Nabe abstützen. Da die Nabe und der Planetenträger miteinander umlaufen, besteht hierdurch die Möglichkeit, die Druckfedern in der Ebene der Planetenräder anzuordnen oder eine parallel dazu versetzte Ebene zu finden, in der die Federn die auf den Planetenträger wirkenden Kippkräfte weitgehend kompensieren. Dabei kann zweckmässig das äussere Zentralrad durch eine eingelenkige Zahnkupplung mit dem Halteflansch verbunden sein oder mit diesem Halteflansch eine untrennbare Einheit bilden.

Eine andere bevorzugte Weiterbildung der Erfindung besteht darin, dass der Halteflansch auf dem Umfang radiale Einschnitte aufweist, die die Druckfedern aufnehmen. Die Federn liegen somit in der Ebene des Halteflansches und nehmen praktisch keinen zusätzlichen Raum für sich in Anspruch. Als Druckfeder kann vorteilhaft eine wellenförmig endlose Feder dienen, die sich auf einer mit dem Zentralrad gleichmittigen, seitlichen Auskragung des Halteflansches abstützt und von dem freien Ende dieser Auskragung axial übergriffen wird. Dabei kann zweckmässig der Planetenträger durch eine Zahnkupplung mit der Nabe des Laufrades verbunden werden oder die Nabe kann so ausgebildet werden, dass sie unmittelbar als Planetenträger dient.

Die Erfindung wird im folgenden anhand von in den Zeichnungen schematisch dargestellten Ausführungsbeispielen erläutert. Es zeigen

Fig. 1 die Hälfte eines Laufrades für Schienenfahrzeuge, in dessen Nabe ein Planetengetriebe angeordnet ist, im Schnitt nach der Linie I–II in Fig. 3,

Fig. 2 eine weitere Hälfte eines Laufrades mit einem etwas geänderten Planetengetriebe im Schnitt nach der Linie I–II in Fig. 3,

Fig. 3 einen Schnitt nach der Linie III–III in Fig. 1 oder 2,

Fig. 4 eine andere Ausführungsform des Planetengetriebes in dem Laufrad im Schnitt,

Fig. 5 einen Schnitt nach der Linie V–V in Fig. 4,

Fig. 6 eine noch weiter abgewandelte Form des Planetengetriebes in dem Laufrad im Schnitt und

Fig. 7 einen Schnitt nach der Linie VII–VII in Fig. 6.

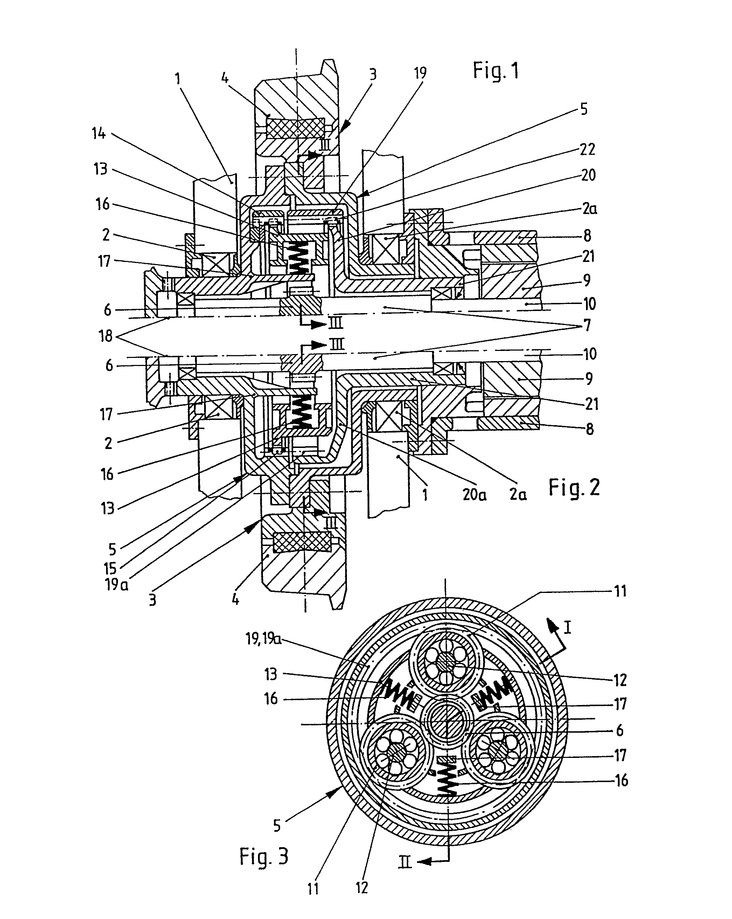

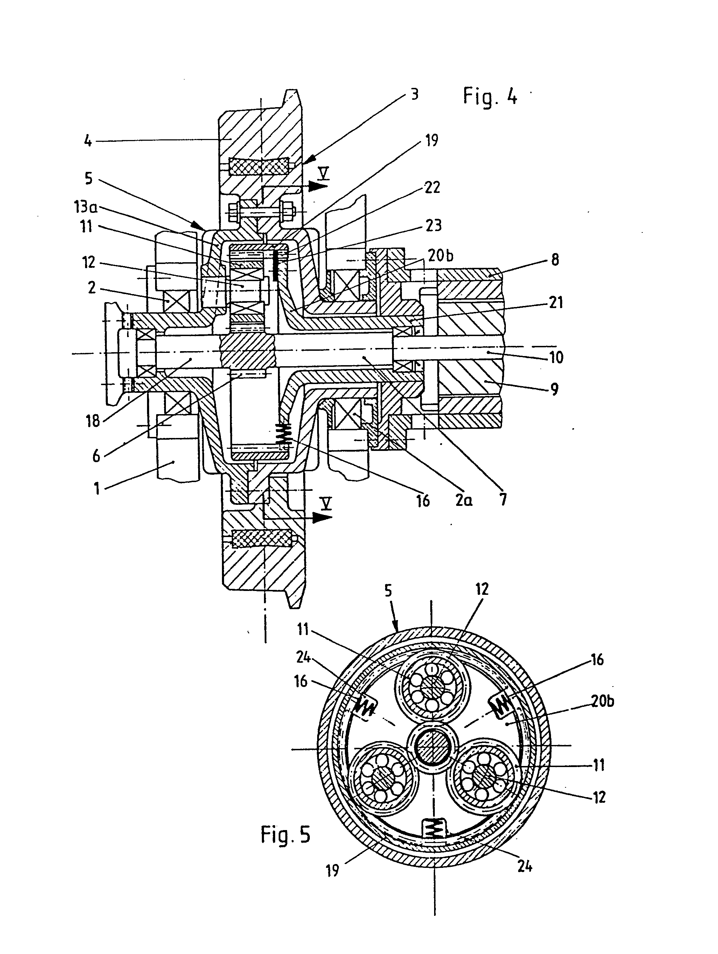

In den Fig. 1, 2, 4 und 6 ist mit 1 eine Schwinge eines Drehgestells für Schienenfahrzeuge bezeichnet, in der ein mit einer gummigefederten Bandage 4 versehenes Laufrad 3 in Lagern 2 und 2a gelagert ist. An dem Laufrad 3 ist eine zweiteilige Nabe 5 befestigt, die ein Planetengetriebe umschliesst, dessen inneres Zentralrad 6 mit Planetenrädern 11 kämmt, deren Achsen 12 fest in ihrem Träger verankert sind (siehe z.B. Fig. 4). Das äussere Zentralrad 19 oder 19a, das zum Zwecke der Nachgiebigkeit verhältnismässig dünn ausgeführt ist, ist durch einen etwa senkrecht zu der Radachse verlaufenden Halteflansch 20 oder 20a oder 20b oder 20c festgehalten. Dies erfolgt mittels einer Hohlachse 21, die sich an dem Halteflansch anschliesst und die Nabe 5 durchdringend jenseits derselben über Verbindungselemente an der Schwinge 1 festgelegt ist. Das innere Zentralrad 6 sitzt auf einer Welle 7, die von einem Elektromotor 8 angetrieben ist, dessen Läufer 9 auf einem aus dem Getriebe herausgeführten Fortsatz 10 der Welle 7 fliegend angeordnet ist.

Gemäss den Fig. 1 bis 3 ist ein Planetenträger 13 freibeweglich angeordnet und in Fig. 1 durch eine doppelgelenkige Zahnkupplung 14 und in Fig. 2 duch eine eingelenkige Zahnkupplung 15 mit der Nabe 5 verbunden. Er wird durch drei gleichmässig verteilte und als Schraubenfedern ausgebildete Druckfedern 16 zentriert, die sich auf je einem von der Nabe 5 ausgehenden und gemeinsam einen zentralen Teil darstellenden Vorsprung 17 abstützen und mit ihren Wirkungslinien in einem Punkt auf der Laufrad-Mittellinie 18 schneiden. Während das äussere Zentralrad 19 gemäss Fig. 1 mit dem Halteflansch 20 durch eine eingelenkige Zahnkupplung 22 verbunden ist, bildet es gemäss Fig. 2 – mit 19a bezeichnet – mit dem Halteflansch 20a eine untrennbare Einheit.

In den Fig. 4 und 5 ist das äussere Zentralrad 19 freibeweglich angeordnet, und die Druckfedern 16 wirken zentrierend auf dieses ein und verhindern eine flankenspielfreie Auflage auf den Zähnen der Planetenräder 11 bei Stillstand oder reversierendem Betrieb. Das äussere Zentralrad 19 ist daher durch die eingelenkige Zahnkupplung 22 mit dem Halteflansch 20b verbunden, wobei in die Verzahnung eingreifende Haltesegmente 23 die axiale Sicherung des äusseren Zentralrades 19 gewährleisten. Die Druckfedern 16 stützen sich auf dem Grund von Einschnitten 24 ab, die in Umfangsrichtung unter $3 \times 120°$ in dem Halteflansch 20b vorgesehen sind und an dessem Umfang radial frei ausmünden. Als Planetenträger 13a dient diesmal gleich die Wandung der Nabe 5, in die die Achse 12 der Planetenräder 11 unmittelbar eingespannt ist.

Natürlich können die Achsen 12 auch jetzt – ähnlich wie in Fig. 2 – in einem gesonderten Planetenträger eingespannt sein, und dieser Planetenträger kann über eine Zahnkupplung mit der Nabe 5 verbunden sein. Diese Ausführung ist nicht gezeichnet.

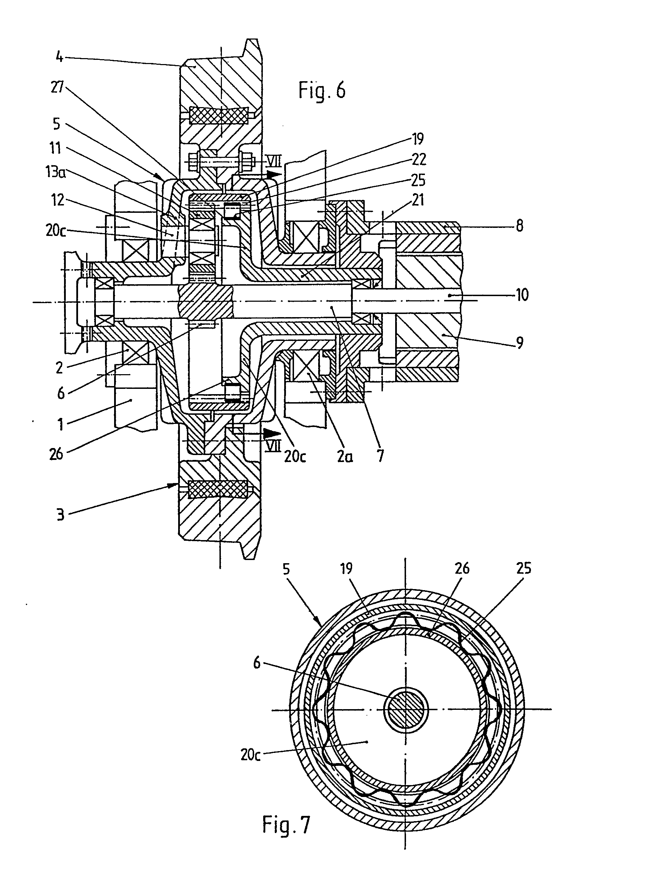

Die Fig. 6 und 7 unterscheiden sich von den Fig. 4 und 5 lediglich in der Ausführung der das äussere Zentralrad 19 zentrierenden Druckfedern. Hier wird eine endlos wellenförmige Feder 25 verwendet, die um eine zentrale Auskragung 26 des Halteflansches 20c gelegt ist und unter Druck gegen das äussere Zentralrad 19 anliegt und in dessen Verzahnung eingreift. Zur axialen Fixierung übergreift das Ende 27 der Auskragung 26 die Feder 25.

**Patentansprüche**

1. Von einem inneren Zentralrad (6) angetriebenes Planetengetriebe, insbesondere in Laufrädern (3) von Schienenfahrzeugen, dessen Planetenträger (13) mit dem Laufrad umläuft und dessen mit dem äusseren feststehenden Zentralrad (19; 19a) kämmende Planetenräder (11) in ihrer Ebene zum Zwecke des Lastausgleiches beweglich angeordnet sind, dadurch gekennzeichnet, dass rotationssymmetrisch um die Getriebemitte herum gleichstarke und mit ihren radialen Wirkungslinien sich in einem gemeinsamen Punkt schneidende Druckfedern (16) vorgesehen sind, die sich auf einem zentralen Teil (17) des Laufrades (3) abstützen und den Planetenträger (13) zentrieren, der Planetenträger mit den Achsen (12) der Planetenräder (11) starr, jedoch mit der Nabe (5) des Laufrades über eine Zahnkupplung (14 oder 15) radial bewegbar verbunden ist und wahlweise zu der über ihren Träger vorgenommenen Beweglichkeit der Planetenräder auch das äussere Zentralrad (19) radial beweglich ist.

2. Von einem inneren Zentralrad (6) angetriebenes Planetengetriebe, insbesondere in Laufrädern (3) von Schienenfahrzeugen, dessen Planetenträger (13a) mit den Achsen (12) der Planetenräder (11) starr vereint ist und den Abtrieb bildet, wobei um die Getriebemitte herum rotationssymmetrische, gleichstarke, mit ihren radialen Wirkungslinien sich in einem gemeinsamen Punkt schneidende und zentrierende Federn (16; 25) das äussere Zentralrad (19) mit einem das Reaktionsmoment desselben aufnehmenden flanschartigen und ortsfesten Teil (20b; 20c) radial bewegbar verbinden, dadurch gekennzeichnet, dass zwischen dem äusseren Zentralrad (19) und dem flanschartigen Teil (20b; 20c) eine Zahnkupplung (22) angeordnet ist, als Federn sich auf dem flanschartigen Teil abstützende Druckfedern (16; 25) dienen und wahlweise zu der durch die Druckfedern vorgenommenen Beweglichkeit des äusseren Zentralrades auch der Planetenträger (13a) radial beweglich ist.

3. Planetengetriebe nach Anspruch 1 oder 2, dadurch gekennzeichnet, dass jede der Druckfedern (16) im eingebauten Zustand eine Kraft ausübt, die dem Gewicht des durch sie zentrierten Teiles (Planetenträger 13; äusseres Zentralrad 19) entspricht.

4. Planetengetriebe nach Anspruch 1 oder 2, dadurch gekennzeichnet, dass dem äusseren Zentralrad (19; 19a) ein feststehender Halteflansch (20; 20a; 20b; 20c) zugeordnet ist, der mit einer Hohlachse (21) die Nabe (5) des Laufrades (3) durchsetzt.

5. Planetengetriebe nach Anspruch 1, dadurch gekennzeichnet, dass die Druckfedern (16) sich auf je einem in den Planetenträger (13) zwischen den Planetenrädern (11) einragenden Vorsprung (17) der Nabe (5) abstützen.

6. Planetengetriebe nach Anspruch 4 und 5, gekennzeichnet durch eine eingelenkige Zahnkupplung (22) zum Verbinden des äusseren Zentralrades (19) mit dem Halteflansch (20).

7. Planetengetriebe nach Anspruch 4 und 5, dadurch gekennzeichnet, dass das äussere Zentralrad (19a) und der Halteflansch (20a) eine untrennbare Einheit bilden.

8. Planetengetriebe nach Anspruch 2, dadurch gekennzeichnet, dass der Halteflansch (20b) auf dem Umfang radiale Einschnitte (24) aufweist, die die Druckfedern (16) aufnehmen.

9. Planetengetriebe nach Anspruch 2, dadurch gekennzeichnet, dass der Halteflansch (20c) eine mit dem Zentralrad (19) gleichmittige, seitliche Auskragung (26) besitzt, die eine sich auf ihr abstützende, wellenförmig endlose Feder (25) trägt und diese mit ihrem Ende (27) axial übergreift.

10. Planetengetriebe nach Anspruch 8 oder 9, gekennzeichnet durch eine Zahnkupplung zum Verbinden des Planetenträgers mit der Nabe (5) des Laufrades (3).

11. Planetengetriebe nach Anspruch 8 oder 9, dadurch gekennzeichnet, dass die Nabe (5) unmittelbar als Planetenträger (13a) ausgebildet ist.

**Claims**

1. Planetary gear driven by an inner central wheel (6), especially in running wheels (3) of rail vehicles, the planet wheel carrier (13) of said gear rotating with the running wheel, and the planet wheels (11) of the said gear, which mesh with the outer stationary central wheel (19, 19a), being arranged to be movable in their plane for load compensation purposes, characterised in that compression springs (16) equal in strength and having their radial lines of action intersecting at a common point are provided rotationally symmetrically about the gear centre, and are supported on a central part (17) of the running wheel (3) and centre the planet wheel carrier (13), the planet wheel carrier is connected rigidly to the pins (12) of the planet wheels (11) but in radially movable manner to the hub (5) of the running wheel through the agency of a toothed coupling (14 or 15), and the outer central wheel (19) is also radially movable selectively in addition to the mobility of the planet wheels which is provided through their carrier.

2. Planetary gear driven by an inner central wheel (6), especially in running wheels (3) or rail vehicles, its planet wheel carrier (13a) being rigidly connected to the pins (12) of the planet wheels (11) and forming the drive output means, and centering springs (16; 25) of like strength which are rotationally symmetrical about the centre of the gear and have their radial lines of action intersecting at a common point connect the outer central wheel (19), in a manner allowing radial movement, to a flange-type stationary part (20b; 20c) taking up the reaction moment of the said central wheel, characterised in that a toothed coupling (22) is arranged between the outer central wheel (19) and the flange-type part (20b; 20c), the springs used are compression springs (16; 25) bearing on the flange-type part, and selectively the planet wheel carrier (13a) is also adapted to move radially in addition to the mobility of the outer central wheel which is provided through the compression springs.

3. Planetary gear according to claim 1 or 2, characterised in that each of the compression springs (16) in the fitted state exerts a force which corresponds to the weight of the part centred thereby (planet wheel carrier 13; outer central wheel 19).

4. Planetary gear according to claim 1 or 2, characterised in that there is associated with the outer central wheel (19; 19a) a stationary holding flange (20; 20a; 20b; 20c) which with a hollow shaft portion (21) extends through the hub (5) of the running wheel (3).

5. Planetary gear according to claim 1, characterised in that the compression springs (16) each bear on a respective projection (17) projecting into the planet wheel carrier (13) between the planet wheels (11).

6. Planetary gear according to claims 4 and 5, characterised by a single-articulation toothed coupling (22) for connection of the outer central wheel (19) to the holding flange (20).

7. Planetary gear according to claims 4 and 5, characterised in that the outer central wheel (19a) and the holding flange (20a) form an indivisible unit.

8. Planetary gear according to claim 2, characterised in that the holding flange (20b) comprises at the periphery radial recesses (24) which accommodate the compression springs (16).

9. Planetary gear according to claim 2, characterised in that the holding flange (20c) has a lateral projecting portion (26) which is concentric with the central wheel (19), carries an undulatorily endless spring (25) bearing on the said portion, and extends axially over said spring with its end (27).

10. Planetary gear according to claim 8 or 9, characterised by a toothed coupling for connecting the planet wheel carrier to the hub (5) of the running wheel (3).

11. Planetary gear according to claim 8 or 9, characterised in that the hub (5) is constructed directly as the planet wheel carrier (13a).

**Revendications**

1. Réducteur planétaire entraîné par une roue planétaire (6) notamment pour roues (3) de véhicules ferroviaires, dont le porte-satellites (13) tourne avec la roue et dont les roues satellites (11), qui engrènent avec une couronne extérieure fixe (19; 19a), sont montées mobiles dans leur plan pour l'équilibrage des efforts, caractérisé par le fait que sont prévus des ressorts de compression (16) de même force, disposés selon une symétrie centrale autour du centre du réducteur, et dont les lignes d'action radiales se coupent en un même point, ces ressorts prenant appui sur une partie centrale (17) de la roue (3) et centrant le porte-satellites (13), le porte-satellites étant réuni rigidement aux axes (12) des roues satellites (11) mais étant réuni au moyeu (5) de la roue avec liberté de déplacement radial, par un accouplement à dents (14 ou 15), cependant que, en supplément de la mobilité des roues satellites, qui est assurée par l'intermédiaire de leur porte-satellites, la couronne extérieure (19) peut éventuellement être elle aussi mobile dans la direction radiale.

2. Réducteur planétaire entraîné par une roue planétaire (6), notamment pour roues (3) de véhicules ferroviaires, dont le porte-satellites (13a) est réuni rigidement aux axes (12) des roues satellites (11) et forme l'élément de sortie, cependant que des ressorts (16; 25) de même force, disposés selon une symétrie centrale autour du centre du réducteur, dont les lignes d'action radiales se coupent en un même point et qui servent au centrage, relient la couronne extérieure (19), avec une liberté de déplacement radial à une pièce (20b; 20c) en forme de flasque, fixe en position et qui absorbe le couple de réaction de cette couronne, caractérisé par le fait qu'un accouplement à dents (22) est interposé entre la couronne extérieure (19) et la pièce (20b; 20c) en forme de flasque, qu'on utilise comme ressorts des ressorts de compression (16; 25) qui prennent appui sur la pièce en forme de flasque et que, en supplément de la mobilité de la couronne extérieure qui est asssurée par les ressorts de compression, le porte-satellites (13a) peut éventuellement être lui aussi mobile en direction radiale.

3. Réducteur planétaire selon la revendication 1 ou la revendication 2, caractérisé par le fait que, à l'état monté, chacun des ressorts de compression (6) exerce une force qui correspond au poids de l'élément centré par ces ressorts (porte-satellites 13; couronne extérieure 19).

4. Réducteur planétaire selon la revendication 1 ou la revendication 2, caractérisé par le fait qu'à la couronne extérieure (19; 19a) est associé un flasque support fixe (20; 20a; 20b; 20c) qui est muni d'un axe creux (21) qui traverse le moyeu (5) de la roue (3).

5. Réducteur planétaire selon la revendication 1, caractérisé par le fait que les ressorts de compression (16) prennent appui chacun sur une console (17) du moyeu (5) qui est engagée à l'intérieur du porte-satellites (13) entre les roues satellites (11).

6. Réducteur planétaire selon les revendications 4 et 5, caractérisé par un accouplement à dents (22) à articulation unique, servant à relier la couronne extérieure (19) au flasque support (20).

7. Réducteur planétaire selon les revendications 4 et 5, caractérisé par le fait que la couronne extérieure (19a) et le flasque support (20a) forment ensemble une unité indissociable.

8. Réducteur planétaire selon la revendication 2, caractérisé par le fait que le flasque support (20b) présente sur sa périphérie des encoches radiales (24) qui reçoivent des ressorts de compression (16).

9. Réducteur planétaire selon la revendication 2, caractérisé par le fait que le flasque support (20c) possède un collet latéral (26) coaxial à la couronne extérieure (19), qui porte un ressort sans fin ondulé (25) prenant appui sur ce collet, et qui déborde axialement au-delà de ce ressort par une extrémité (27).

10. Réducteur planétaire selon la revendication 8 ou la revendication 9, caractérisé par un accouplement à dents servant à relier le porte-satellites au moyeu (5) de la roue (3).

11. Réducteur planétaire selon la revendication 8 ou la revendication 10, caractérisé par le fait que le moyeu (5) constitue directement le porte-satellites (13a).

Fig. 1

Fig. 2

Fig. 3

Fig. 4

Fig. 5

0 097 963

Fig. 6

Fig. 7